# EUROPÄISCHE PATENTANMELDUNG

(11) **EP 4 193 823 A1**
(43) Veröffentlichungstag der Anmeldung: **14.06.2023**
(21) Anmeldenummer: 22209972.3
(22) Anmeldetag: 28.11.2022
(51) Int. Cl.: A01C 3/02, E04H 7/06, E04B 1/35, E04B 1/19

(54) **TRÄGERKONSTRUKTION FÜR EIN EMISSIONSSCHUTZDACH**

(30) Priorität: 07.12.2021 DE 202021106665 U
(71) Anmelder: Huesker Synthetic GmbH, 48712 Gescher (DE)
(72) Erfinder: Hüning, Ulrich, 48712 Gescher (DE); Altenburg, Rolf, 32429 Minden (DE)
(74) Vertreter: Pelster Behrends Patentanwälte PartG mbB

(57) **Zusammenfassung**

Die Erfindung betrifft eine Trägerkonstruktion (10) für ein Emissionsschutzdach (100) eines oben offenen Bauwerks (200), beispielsweise eines Behälters einer Biogasanlage oder eines Güllebehälters, mit einem zentralen Gurtumlenkkörper (18), welcher dazu eingerichtet ist, in einem Zentralbereich des Emissionsschutzdachs (100) ohne Bodenkontakt oberhalb eines Boden (B) zu schweben, und einer Gurtanordnung (12) mit einer Mehrzahl von Stützgurten (14, 14a-14j, 24, 26), welche durch den Gurtumlenkkörper (18) umgelenkt werden.

## Beschreibung

Die Erfindung betrifft eine Trägerkonstruktion für ein Emissionsschutzdach eines oben offenen Bauwerks, beispielsweise eines Behälters einer Biogasanlage oder eines Güllebehälters.

Die Erfindung betrifft ferner ein Emissionsschutzdach mit einer Trägerkonstruktion und einer Abdeckung, welche von der Trägerkonstruktion getragen wird.

Emissionsschutzdächer werden eingesetzt, um die Einleitung von in Behälterbauwerken entstehenden Gasen in die Umgebung zu verhindern oder zumindest zu verringern. In diesem Zusammenhang werden Emissionsschutzdächer beispielsweise verwendet, um ein übermäßiges Freisetzen von Kohlenstoffdioxid, Methan, Ammoniak und/oder Schwefelwasserstoff zu verhindern. Die in entsprechenden Behälterbauwerken entstehenden Gase können darüber hinaus gesundheitsschädlich sein und/oder den Aufenthaltskomfort in der Umgebung des Behälterbauwerks, beispielsweise aufgrund einer Geruchsbelastung, erheblich beeinträchtigen.

In der Praxis werden bereits Behälterbauwerke ohne Überdachung eingesetzt, sodass zur Vermeidung von unnötigen Baukosten ein großer Bedarf an nachträglich installierbaren Emissionsschutzdächern besteht. Am Markt werden in diesem Zusammenhang Emissionsschutzdächer mit einer zentralen Mittelstütze angeboten, wobei ein Großteil der Dachlast über die zentrale Mittelstütze abgestützt wird. Hierfür ist es erforderlich, dass die zentrale Mittelstütze im Behälterinneren Bodenkontakt aufweist, um die Stützwirkung umsetzen zu können. Emissionsschutzdächer mit derartigen Mittelstützen lassen sich jedoch nur installieren, wenn das Behälterbauwerk zuvor entleert wurde. Eine derartige Behälterentleerung ist äußerst aufwändig und in Einzelfällen auch nicht ohne Weiteres realisierbar. Außerdem befindet sich in der Mitte entsprechender Behälterbauwerke häufig ein Pumpensumpf, sodass eine Anordnung einer zentralen Mittelstütze in diesem Bereich nicht möglich ist. Darüber hinaus weisen Beton-Bodenplatten von Behälterbauwerken häufig keine ausreichende Stabilität zur Abstützung einer zentralen Mittelstütze auf, sodass es durch die Abstützung einer zentralen Mittelstütze zu einer Beschädigung der Bodenplatte kommen kann. Insofern lassen sich Emissionsschutzdächer mit zentralen Mittelstützen bei einer Vielzahl von bereits existierenden Behälterbauwerken nicht oder nur mit einem sehr hohen Aufwand nachrüsten.

Im Stand der Technik sind ferner Emissionsschutzdächer bekannt, welche als freitragende Konstruktionen ausgeführt sind. Eine derartige freitragende Dachkonstruktion ist beispielsweise aus der Druckschrift EP 2 826 353 B1 bekannt.

Diese und andere freitragende Dachkonstruktionen für Behälterbauwerke erfordern jedoch eine vergleichsweise schwere und materialintensive Strebenkonstruktion. Dies führt zu hohen Material-, Herstellungs- und Transportkosten. Darüber hinaus ist die Installation entsprechender Stahlkonstruktionen vergleichsweise aufwendig und führt somit ebenfalls zu gesteigerten Gesamtkosten.

Die der Erfindung zugrundeliegende Aufgabe besteht also darin, die nachträgliche Installation eines freitragenden Emissionsschutzdaches ohne eine sich am Boden abstützende zentrale Mittelstütze zu vereinfachen und die Kosten für eine entsprechende nachträgliche Installation zu reduzieren.

Die Aufgabe wird gelöst durch eine Trägerkonstruktion der eingangs genannten Art, wobei die erfindungsgemäße Trägerkonstruktion einen zentralen Gurtumlenkkörper aufweist, welcher dazu eingerichtet ist, in einem Zentralbereich des Emissionsschutzdachs ohne Bodenkontakt oberhalb des Bodens zu schweben. Die erfindungsgemäße Trägerkonstruktion umfasst ferner eine Gurtanordnung mit einer Mehrzahl von Stützgurten, welche durch den Gurtumlenkkörper umgelenkt werden.

Dadurch, dass der Gurtumlenkkörper schwebend ausgeführt ist, wird eine für viele Anwendungen störende sich bis auf den Boden erstreckende Mittelstütze vermieden. Ein entsprechendes Emissionsschutzdach kann also auch bei Behälterbauwerken installiert werden, ohne dass diese zuvor zu entleeren sind. Ferner ist auch eine Installation bei Behälterbauwerken möglich, welche einen zentralen Pumpensumpf aufweisen, da eine zentrale Strebenabstützung nicht erforderlich ist.

Durch die Gurtanordnung der erfindungsgemäßen Trägerkonstruktion können im Vergleich zu einer Stahlstrebenkonstruktion höhere und dynamischere Belastungen aufgenommen werden. Die Installation der Trägerkonstruktion ist aufgrund der Verwendung von Gurten im Vergleich zu einer Stahlstrebenkonstruktion erheblich vereinfacht. Es werden keine vorabgelängten Stahlstreben benötigt, welche aufwendig in ein Strebengerüst zu integrieren sind. Etwaige Schweiß- und/oder Schraubarbeiten entfallen. Die Ablängung der Stützgurte der Gurtanordnung kann vor Ort direkt am Behälterbauwerk erfolgen, wodurch zeit- und arbeitsintensive Vermessungen des Behälterbauwerks entfallen können. Die Installationsarbeiten erfordern außerdem keine Montagetraverse, sodass der Montageaufwand erheblich verringert ist.

Bei der Trägerkonstruktion handelt es sich vorzugsweise um eine Trägerkonstruktion für ein freitragendes Emissionsschutzdach.

Durch die Verwendung einer Gurtanordnung mit einer Mehrzahl von Stützgurten wird außerdem die Wartung und Reparatur der Trägerkonstruktion erheblich vereinfacht. Beschädigte Stützgurte können ohne großen Aufwand ausgetauscht werden. Ein aufwendiges Heraustrennen von Strahlstreben und die Einpassung von Ersatzstrebensegmenten entfällt.

Die Trägerkonstruktion eignet sich ohne Weiteres für ein Emissionsschutzdach eines Behälters einer Biogasanlage oder eines Güllebehälters.

Temperaturschwankungen, die sich in der Praxis zwischen -40 und +60 Grad Celsius bewegen können und der Kontakt mit Gülle ist sowohl für den Gurtumlenkkörper als auch für die Stützgurte der Gurtanordnung unbedenklich.

In einer bevorzugten Ausführungsform der erfindungsgemäßen Trägerkonstruktion sind die Stützgurte als textile Spann- und/oder Zurrgurte ausgebildet. Die Gurtanordnung der Trägerkonstruktion ist also ein Spanngurtsystem oder ein Zurrgurtsystem. Die Stützgurte weisen beispielsweise eine Zugfestigkeit in einem Bereich zwischen 40 kN und 70 kN auf. Einzelne oder sämtliche Stützgurte können beispielsweise abschnittsweise oder vollständig beschichtet sein. Insbesondere können einzelne oder sämtliche Stützgurte eine PVC-Beschichtung aufweisen. Beispielsweise sind die Stützgurte aus Aramidfasern und/oder Polyesterfasern ausgebildet oder umfassen Aramidfasern und/oder Polyesterfasern.

In einer anderen bevorzugten Ausführungsform der erfindungsgemäßen Trägerkonstruktion sind die Stützgurte jeweils dazu eingerichtet, an zwei in Umfangsrichtung voneinander beabstandeten Wandsegmenten einer umlaufenden Bauwerksbewandung fixiert zu werden. Durch die Fixierung an zwei in Umfangsrichtung voneinander beabstandeten Wandsegmenten und die Umlenkung durch den im Zentralbereich des Emissionsschutzdachs angeordneten zentralen Gurtumlenkkörper verlaufen die jeweiligen Stützgurte also V-förmig, wobei das offene Ende des V in Richtung der umlaufenden Bauwerksbewandung zeigt und das geschlossene Ende des V in Richtung des zentralen Gurtumlenkkörpers zeigt. Die umlaufende Bauwerksbewandung kann beispielsweise aus Stahl und/oder Beton und/oder einem anderen Bewandungsbaustoff ausgebildet sein.

Darüber hinaus ist eine erfindungsgemäße Trägerkonstruktion bevorzugt, bei welcher die Stützgurte jeweils zwei Gurtschenkel aufweisen, welche durch eine Gurtumlenkung durch den Gurtumlenkkörper gebildet werden, wobei sich die Gurtschenkel in voneinander abweichende Erstreckungsrichtungen, insbesondere Radialrichtungen, von dem Zentralbereich nach außen erstrecken. Vorzugsweise erstrecken sich die Gurtschenkel der jeweiligen Stützgurte von dem zentralen Gurtumlenkkörper in Richtung der umlaufenden Bauwerksbewandung. Dadurch, dass die Stützgurte durch den zentralen Gurtumlenkkörper umgelenkt werden und die Gurtschenkel der jeweiligen Stützgurte voneinander abweichende Erstreckungsrichtungen aufweisen, wird die benötigte Gurtanzahl halbiert, da die zwei Gurtschenkel der jeweiligen umgelenkten Stützgurte jeweils einen nicht-umgelenkten Stützgurt ersetzen können. Hierdurch wird die Montage der Trägerkonstruktion erheblich vereinfacht. Es entfallen aufwendige Befestigungs- bzw. Fixierarbeiten an den Stützgurtenden.

Es ist darüber hinaus eine erfindungsgemäße Trägerkonstruktion bevorzugt, bei welcher die Gurtschenkel der jeweiligen Stützgurte einen Spreizwinkel zueinander aufweisen, wobei der Spreizwinkel vorzugsweise in einem Bereichzwischen 0° und 5° oder in einem Bereich zwischen 5° und 45°, insbesondere in einem Bereich zwischen 10° und 30°, besonders bevorzugt in einem Bereich zwischen 15° und 25° liegt. Insbesondere weisen die Gurtschenkel der jeweiligen Stützgurte einen Spreizwinkel von etwa 20° zueinander auf. Die Gurtschenkel mehrerer Stützgurte erstrecken sich vorzugsweise strahlenförmig von dem zentralen Gurtumlenkkörper nach außen in Richtung der umlaufenden Bauwerksbewandung.

Es ist darüber hinaus eine erfindungsgemäße Trägerkonstruktion vorteilhaft, bei welcher sich mehrere Stützgurte entlang einer gemeinsamen Rotationsfläche erstrecken. Die Rotationsfläche kann eine fiktive scheibenförmige Fläche oder eine fiktive konusförmige Fläche sein, innerhalb welcher mehrere Stützgurte einer Stützgurtgruppe liegen. Die konusförmige Rotationsfläche kann nach oben hin zulaufend oder nach unten hin zulaufend ausgebildet sein.

Die erfindungsgemäße Trägerkonstruktion wird ferner dadurch vorteilhaft weitergebildet, dass der Gurtumlenkkörper eine längliche Zentralstrebe mit einer oder mehreren, insbesondere umlaufenden, Umlenkkontaktgliedern umfasst, wobei die Stützgurte mit den Umlenkkontaktgliedern in Kontakt stehen. Die Umlenkkontaktglieder weisen vorzugsweise einen für die Gurtumlenkung geeigneten Querschnitt bzw. eine für die Gurtumlenkung geeignete Außenkontur auf. Die Außenkontur der Umlenkkontaktglieder ist vorzugsweise, zumindest im Kontaktbereich der Stützgurte, kantenfrei ausgebildet, sodass ein Aufreiben und/oder Scheuern der Stützgurte an Konturkanten vermieden wird. Die Umlenkkontaktglieder weisen vorzugsweise eine gekrümmte oder gebogene Kontaktfläche für die Stützgurte auf.

In einer anderen bevorzugten Ausführungsform der erfindungsgemäßen Trägerkonstruktion ist das eine oder sind die mehreren Umlenkkontaktglieder jeweils als umlaufende Umlenkkontaktringe ausgebildet. Die Umlenkkontaktringe können stoffschlüssig, reibschlüssig und/oder formschlüssig mit einer Zentralstrebe des Gurtumlenkkörpers verbunden sein. Die Umlenkkontaktringe und/oder die Zentralstrebe können aus Stahl, insbesondere Edelstahl, ausgebildet sein. Alternativ können die Umlenkkontaktringe und/oder die Zentralstrebe aus Aluminium ausgebildet sein. Die Umlenkkontaktringe können an der Zentralstrebe verschweißt oder mit der Zentralstrebe verklebt sein.

In einer anderen bevorzugten Ausführungsform der erfindungsgemäßen Trägerkonstruktion weist der Gurtumlenkkörper mehrere voneinander beabstandete Umlenkebenen auf, wobei in den jeweiligen Umlenkebenen jeweils Gruppen von Stützgurten umgelenkt werden. Die Umlenkebenen sind vorzugsweise in vertikaler Richtung voneinander beabstandet. In jeder Umlenkebene befindet sich vorzugsweise ein Umlenkkontaktglied, beispielsweise ein Umlenkkontaktring.

Die erfindungsgemäße Trägerkonstruktion wird ferner dadurch vorteilhaft weitergebildet, dass der Gurtumlenkkörper eine Umlenkebene aufweist, in welcher mehrere sich entlang einer gemeinsamen umlaufenden und nach oben hin zulaufenden Mantelfläche erstreckende Stützgurte umgelenkt werden. Bei dieser Umlenkebene handelt es sich vorzugsweise um eine obere Umlenkebene des Gurtumlenkkörpers. Der Gurtumlenkkörper kann ferner eine Umlenkebene aufweisen, in welcher sich mehrere innerhalb einer gemeinsamen Ebene erstreckende Stützgurte umgelenkt werden. Bei dieser Umlenkebene handelt es sich vorzugsweise um eine mittlere Umlenkebene. Der Gurtumlenkkörper kann ferner eine Umlenkebene umfassen, in welcher mehrere sich entlang einer gemeinsamen umlaufenden und nach unten hin zulaufenden Mantelfläche erstreckende Stützgurte umgelenkt werden. Bei dieser Umlenkebene handelt es sich vorzugsweise um eine untere Umlenkebene. Vorzugsweise weist der Gurtumlenkkörper drei Gurtumlenkebenen auf, welche vertikal beabstandet voneinander sind.

In einer anderen bevorzugten Ausführungsform der erfindungsgemäßen Trägerkonstruktion ist an zumindest einem Ende der jeweiligen Stützgurte eine Gurtspannvorrichtung angeordnet, über welche die Gurtspannung des jeweiligen Stützgurts einstellbar ist und welche vorzugsweise dazu eingerichtet ist, an der umlaufenden Bauwerksbewandung angeordnet, insbesondere befestigt zu werden. Die Gurtspannvorrichtungen sind vorzugsweise arretierbar. Über die Arretierung der Gurtspannvorrichtungen erfolgt vorzugsweise die Sicherung bzw. Festsetzung der Stützgurte. Die Gurtspannvorrichtungen können als Ratschen ausgebildet sein. Die Trägerkonstruktion umfasst vorzugsweise mehrere Gurtspannvorrichtungen, welche, insbesondere gleichmäßig verteilt, entlang des Umfangs der Bauwerksbewandung angeordnet sind. Das Spannen bei der Erstinstallation der Trägerkonstruktion und das Nachspannen bei einem Spannungsverlust an einem Stützgurt kann durch die an der Bauwerksbewandung angeordneten Gurtspannvorrichtungen von außen erfolgen. Hierzu sind die Gurtspannvorrichtungen vorzugsweise an der Außenseite der Bauwerksbewandung angeordnet, insbesondere befestigt. Durch die Verwendung von Gurtspannvorrichtungen an der Bauwerksbewandung können Durchgangsbohrungen an der Bauwerksbewandung vermieden werden. Die Gurtspannvorrichtungen sind vorzugsweise dazu eingerichtet, an der Bauwerksbewandung angeschraubt zu werden.

In einer besonders bevorzugten Ausführungsform der erfindungsgemäßen Trägerkonstruktion ist zumindest ein Stützgurt mit einem Dehnungsindikator ausgestattet, mittels welchem die Gurtdehnung zur Belastungsbestimmung erfassbar ist. Der Dehnungsindikator kann einen oder mehrere Messfäden umfassen, wobei die Gurtdehnung beispielsweise durch Ermitteln oder Überprüfen der elektrischen Leitfähigkeit des einen oder der mehreren Messfäden erfolgen kann. Der Dehnungsindikator kann auch eine oder mehrere Markierungen umfassen, wobei die Gurtdehnung über die Position einer Markierung oder die Beabstandung mehrerer Markierungen zueinander erfasst werden kann. Durch Bestimmung der Gurtdehnung kann überprüft werden, ob die Gurtdehnung noch in einem Toleranzbereich liegt oder ob der untersuchte Stützgurt auszutauschen bzw. zu ersetzen ist.

Die der Erfindung zugrundeliegende Aufgabe wird ferner durch ein Emissionsschutzdach der eingangs genannten Art gelöst, wobei die Trägerkonstruktion des erfindungsgemäßen Emissionsschutzdachs nach einer der vorstehend beschriebenen Ausführungsformen ausgebildet ist. Hinsicht der Vorteile und Modifikationen des erfindungsgemäßen Emissionsschutzdachs wird zunächst auf die Vorteile und Modifikationen der erfindungsgemäßen Trägerkonstruktion verwiesen.

In einer bevorzugten Ausführungsform des erfindungsgemäßen Emissionsschutzdachs ist die Abdeckung stoffschlüssig, kraftschlüssig und/oder formschlüssig mit der Trägerkonstruktion, insbesondere mit mehrere Stützgurten der Trägerkonstruktion, verbunden. Die Stützgurte können mit der Abdeckung verschweißt sein oder durch Führungslaschen an der Abdeckung verlaufen. Die Abdeckung kann eine Kunststoffabdeckung und/oder eine Textilabdeckung sein. Die Abdeckung ist vorzugsweise aus einem flüssigkeitsdichten und/oder gasdichten Material ausgebildet. Die Abdeckung kann aus einem Planenmaterial ausgebildet sein.

Das erfindungsgemäße Emissionsschutzdach wird ferner dadurch vorteilhaft weitergebildet, dass die Abdeckung und die Trägerkonstruktion eine Abdeckkuppel bilden. Das Emissionsschutzdach ist in diesem Fall ein freitragendes Kuppeldach.

Nachfolgend werden bevorzugte Ausführungsformen der Erfindung unter Bezugnahme auf die beiliegenden Zeichnungen näher erläutert und beschrieben. Dabei zeigen:
- Fig. 1: ein Behälterbauwerk mit einem erfindungsgemäßen Emissionsschutzdach in einer perspektivischen Darstellung;
- Fig. 2: ein Behälterbauwerk mit einer erfindungsgemäßen Trägerkonstruktion in einer schematischen Schnittdarstellung;
- Fig. 3: die Anordnung und den Verlauf von Stützgurten einer erfindungsgemäßen Trägerkonstruktion in einer schematischen Draufsicht;
- Fig. 4: eine Detaildarstellung der Anordnung und des Verlaufs der Fig. 3 abgebildeten Stützgurte im Nahbereich des Gurtumlenkkörpers;
- Fig. 5: einen Gurtumlenkkörper einer erfindungsgemäßen Trägerkonstruktion in einer schematischen Darstellung;
- Fig. 6: eine Detaildarstellung eines Umlenkkontaktglieds des in der Fig. 5 abgebildeten Gurtumlenkkörpers in einer schematischen Seitenansicht; und
- Fig. 7: eine weitere Detaildarstellung eines Umlenkkontaktglieds des in der Fig. 5 abgebildeten Gurtumlenkkörpers in einer schematischen Draufsicht.

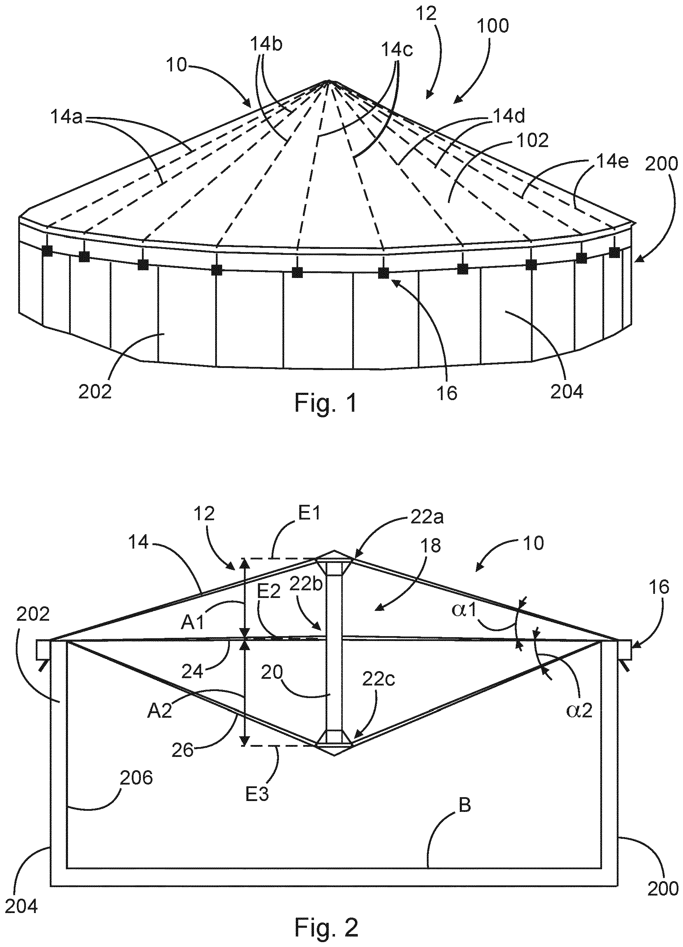

Die Fig. 1 zeigt ein oben offenes Bauwerk 200 in Form eines Behälters. Der Behälter kann beispielsweise Bestandteil einer Biogasanlage sein oder als Güllebehälter Verwendung finden.

Das Behälterbauwerk 200 umfasst eine umlaufende Bauwerksbewandung 202, wobei die Bauwerksbewandung 202 als Betonwand ausgeführt ist.

Auf dem Bauwerk 200 befindet sich ein Emissionsschutzdach 100, über welches die Einleitung von sich innerhalb des Behälterbauwerks 200 bildenden Gasen in die Umgebung verhindert oder zumindest erheblich verringert wird. Das Emissionsschutzdach 100 weist eine Trägerkonstruktion 10 und eine Abdeckung 102 auf, wobei die Abdeckung 102 als Kunststoffabdeckung ausgeführt ist und von der Trägerkonstruktion 10 getragen wird. Die Abdeckung 102 und die Trägerkonstruktion 10 bilden gemeinsam eine Abdeckkuppel.

Die Trägerkonstruktion 10 umfasst eine Gurtanordnung 12 mit einer Mehrzahl von Stützgurten 14a-14e. Die Stützgurte 14a-14e der Gurtanordnung 12 werden von einem in einem Zentralbereich des Emissionsschutzdachs 100 ohne Bodenkontakt und oberhalb eines Bodens schwebenden zentralen Gurtumlenkkörper 18 (in Fig. 1 verdeckt) umgelenkt.

Die Abdeckung 102 liegt auf den Stützgurten 14a-14e auf. Zusätzlich kann die Abdeckung 102 noch stoffschlüssig, kraftschlüssig und/oder formschlüssig mit den Stützgurten 14a-14e der Trägerkonstruktion 10 verbunden sein. Beispielsweise sind die Stützgurte 14a-14e mit der Abdeckung 102 verschweißt oder verlaufen durch Führungslaschen an der Unterseite der Abdeckung 102.

Die Stützgurte 14a-14e verlaufen strahlenförmig von dem Zentralbereich des Emissionsschutzdachs 100 nach außen in Richtung der Bauwerksbewandung 202. An der Außenseite 204 der Bauwerksbewandung 202 sind als Ratschen ausgebildete Gurtspannvorrichtungen 16 befestigt. Die Enden der in dem Zentralbereich des Emissionsschutzdachs 100 umgelenkten Stützgurte 14a-14e sind jeweils mit einer Gurtspannvorrichtung 16 verbunden, sodass über die Gurtspannvorrichtungen 16 die Gurtspannung der Stützgurte 14a-14e einstellbar ist. Die Gurtspannvorrichtungen 16 lassen sich arretieren, um über die Arretierung eine Festsetzung der Stützgurte 14a-14e im gespannten Zustand erreichen zu können. Über die Gurtspannvorrichtungen 16 können die Stützgurte 14a-14e bei der Erstinstallation und bei einem Spannungsverlust von außen mit einem geringen Aufwand gespannt werden.

Die Stützgurte 14a-14e sind als textile Spann- bzw. Zurrgurte ausgebildet und weisen eine Zugfestigkeit im Bereich von 40 kN bis 70 kN auf. Die Stützgurte 14a-14e können Aramidfasern und/oder Polyesterfasern umfassen. Die Stützgurte 14a-14e können ferner abschnittsweise oder vollständig beschichtet sein. Insbesondere können die Stützgurte 14a-14e eine PVC-Beschichtung aufweisen.

Die Fig. 2 zeigt, dass die Trägerkonstruktion 10 einen zentralen Gurtumlenkkörper 18 aufweist, welcher in einem Zentralbereich des Emissionsschutzdachs 100 ohne Bodenkontakt oberhalb des Bodens B des Bauwerks 200 schwebt. Die Innenseite 206 der Bauwerksbewandung 202 umschließt einen Aufnahmebereich für in dem Behälterbauwerk 200 zu lagerndes organisches Material, beispielsweise tierische Exkremente, wie Gülle oder Festmist, und/oder Pflanzen.

Die Gurtanordnung 12 der Trägerkonstruktion 10 weist drei Gruppen von Stützgurten 14, 24, 26 auf, wobei die Stützgurte 14, 24, 26 durch den zentralen Gurtumlenkkörper 18 im Zentralbereich des Emissionsschutzdachs 100 umgelenkt werden. Die Stützgurte 14, 24, 26 verlaufen strahlenförmig von dem zentralen Gurtumlenkkörper 18 nach außen zur umlaufenden Bauwerksbewandung 202 des Bauwerks 200.

Der Gurtumlenkkörper 18 umfasst eine längliche aufrechte Zentralstrebe 20 und drei umlaufende Umlenkkontaktglieder 22a-22c, wobei die Stützgurte 14, 24, 26 mit den Umlenkkontaktgliedern 22a-22c in Kontakt stehen und durch die Umlenkkontaktglieder 22a-22c im Zentralbereich der Trägerkonstruktion 10 umgelenkt werden.

Der Gurtumlenkkörper 18 weist drei voneinander beabstandete Umlenkebenen E1-E3 auf. Die obere Umlenkebene E1 weist einen Vertikalabstand A1 zu der mittleren Umlenkebene E2 auf. Die mittlere Umlenkebene E2 weist einen Vertikalabstand A2 zu der unteren Umlenkebene E3 auf. In den jeweiligen Umlenkebenen E1-E3 werden jeweils Gruppen von Stützgurten 14, 24, 26 umgelenkt. In der Umlenkebene E1 ist das als Umlenkkontaktring ausgebildete Umlenkkontaktglied 22a angeordnet. In der Umlenkebene E2 ist das als Umlenkkontaktring ausgebildete Umlenkkontaktglied 22b angeordnet. In der Umlenkebene E3 ist das als Umlenkkontaktring ausgebildete Umlenkkontaktglied 22c angeordnet. Die als Umlenkkontaktringe ausgebildeten Umlenkkontaktglieder 22a-22c sind mit der Zentralstrebe 20 verschweißt. In der Umlenkebene E1 werden mehrere sich entlang einer gemeinsamen umlaufenden und nach oben hin zulaufenden Mantelfläche erstreckende Stützgurte 14 umgelenkt. In der Umlenkebene E2 werden mehrere sich innerhalb einer gemeinsamen Horizontalebene erstreckende Stützgurte 24 umgelenkt. In der Horizontalebene E3 werden mehrere sich entlang einer gemeinsamen umlaufenden und nach unten hin zulaufenden Mantelfläche erstreckende Stützgurte 26 umgelenkt. Die Enden sämtlicher Stützgurte 14, 24, 26 erstrecken sich durch als Ratschen ausgebildete Gurtspannvorrichtungen 16 an der Außenseite 204 der Bauwerksbewandung 202.

Die Stützgurte 14 weisen einen Neigungswinkel α1 gegenüber einer Horizontalen bzw. gegenüber den Stützgurten 24 auf. Die Stützgurte 26 weisen einen Neigungswinkel α2 gegenüber einer Horizontalen bzw. gegenüber den Stützgurten 24 auf. Die Neigungswinkel α1, α2 können beispielsweise in einem Bereich zwischen 5° und 45° liegen.

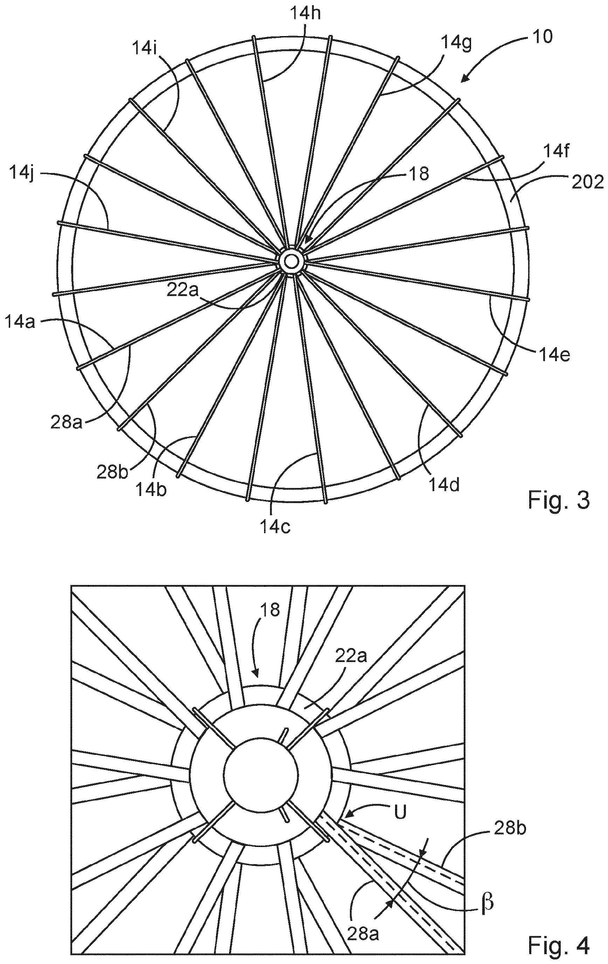

Die Fig. 3 zeigt die strahlenartige Anordnung der Stützgurte 14a-14j der Stützgurtgruppe 14. Die Stützgurte der Stützgurtgruppen 24, 26 können in ähnlicher Weise strahlenförmig angeordnet sein. Die Stützgurte 14a-14j sind jeweils an zwei in Umfangsrichtung voneinander beabstandeten Wandsegmenten der umlaufenden Bauwerksbewandung 202 fixiert. Die Fixierung der Stützgurte 14a-14j erfolgt über die an der Außenseite 204 der Bauwerksbewandung 202 angeordneten Gurtspannvorrichtungen 16. Die Stützgurte 14a-14j weisen jeweils zwei Gurtschenkel 28a, 28b auf.

Die Fig. 4 zeigt, dass die zwei Gurtschenkel 28a, 28b der jeweiligen Stützgurte 14a-14j durch eine Umlenkung U am Gurtumlenkkörper 18 gebildet werden. Die Gurtschenkel 28a, 28b erstrecken sich in voneinander abweichende Erstreckungsrichtungen von dem Zentralbereich des Emissionsschutzdachs 100 nach außen. Die Erstreckungsrichtungen der Gurtschenkel 28a, 28b entsprechend annähernd Radialrichtungen, wobei aufgrund des Versatzes des Umlenkpunktes von der Mittelachse des Emissionsschutzdachs 100 eine geringfügige Abweichung von der Radialrichtung vorhanden ist. Die Gurtschenkel 28a, 28b der jeweiligen Stützgurte 14a-14j weisen einen Spreizwinkel β zueinander auf, wobei der Spreizwinkel β in einem Bereich zwischen 15° und 25°, beispielsweise bei etwa 20°, liegt.

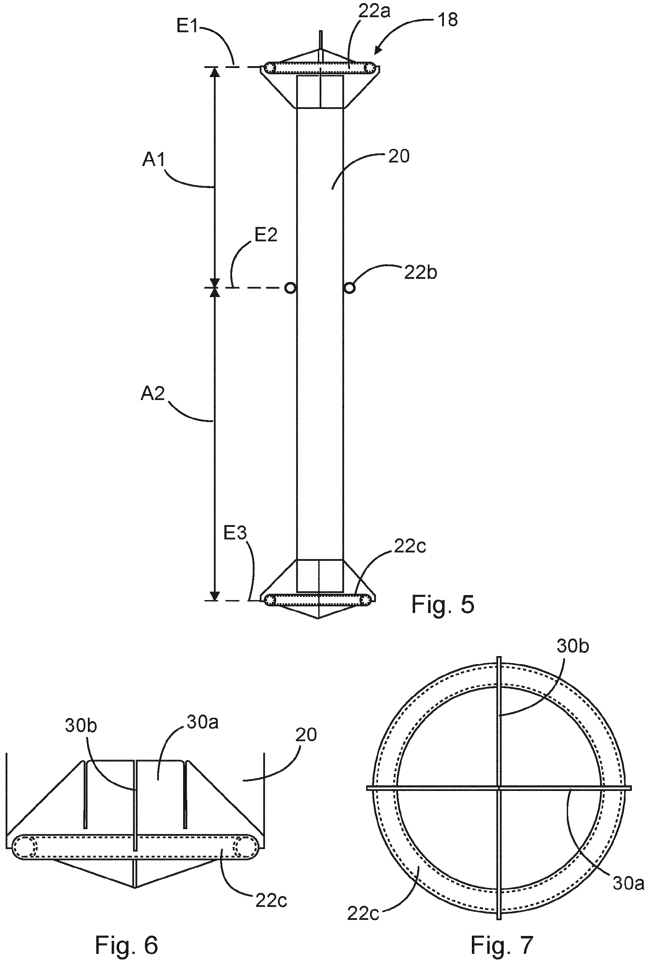

Die Fig. 5 zeigt den Aufbau eines Gurtumlenkkörpers 18 einer Trägerkonstruktion 10. Der Gurtumlenkkörper 18 weist eine längliche Zentralstrebe 20 auf, wobei drei als Umlenkkontaktringe ausgebildete Umlenkkontaktglieder 22a-22c mit der Zentralstrebe 20 verbunden sind. Die Umlenkkontaktglieder 22a-22c sind in voneinander beabstandeten Ebenen E1-E3 angeordnet und weisen Horizontalabstände A1, A2 zueinander auf.

Wie in den Fig. 6 und 7 dargestellt, weist das Umlenkkontaktglied 22c aufgrund der Ringform einen zentralen Durchgang auf, durch welchen die Stützgurte 26 zum Zwecke der Gurtumlenkung durchgeführt werden müssen. Die Umlenkkontaktglieder 22a, 22b weisen ebenfalls einen zentralen Durchgang auf, durch welchen die Stützgurte 14, 14a-14j, 24 zum Zwecke der Umlenkung durchgeführt werden müssen.

Das Umlenkkontaktglied 22c ist über Ringträger 30a, 30b mit der Zentralstrebe 20 des Gurtumlenkkörpers 18 verbunden.

### Bezugszeichen

- 10: Trägerkonstruktion
- 12: Gurtanordnung
- 14, 14a-14j: Stützgurte
- 16: Gurtspannvorrichtungen
- 18: Gurtumlenkkörper
- 20: Zentralstrebe
- 22a-22c: Umlenkkontaktglieder
- 24: Stützgurte
- 26: Stützgurte
- 28a, 28b: Gurtschenkel
- 30a, 30b: Ringträger

- 100: Emissionsschutzdach
- 102: Abdeckung

- 200: Bauwerk
- 202: Bauwerksbewandung
- 204: Außenseite
- 206: Innenseite

- B: Boden
- E1-E3: Umlenkebenen
- A1, A2: Abstände
- U: Gurtumlenkung

- α1, α2: Neigungswinkel
- β: Spreizwinkel

## Patentansprüche

1. Trägerkonstruktion (10) für ein Emissionsschutzdach (100) eines oben offenen Bauwerks (200), beispielsweise eines Behälters einer Biogasanlage oder eines Güllebehälters, **gekennzeichnet durch**
- ein zentralen Gurtumlenkkörper (18), welcher dazu eingerichtet ist, in einem Zentralbereich des Emissionsschutzdachs (100) ohne Bodenkontakt oberhalb eines Boden (B) zu schweben; und
- eine Gurtanordnung (12) mit einer Mehrzahl von Stützgurten (14, 14a-14j, 24, 26), welche durch den Gurtumlenkkörper (18) umgelenkt werden.

2. Trägerkonstruktion (10) nach Anspruch 1,
**dadurch gekennzeichnet, dass** die Stützgurte (14, 14a-14j, 24, 26) als textile Spann- und/oder Zurrgurte ausgebildet sind.

3. Trägerkonstruktion (10) nach Anspruch 1 oder 2,
**dadurch gekennzeichnet, dass** die Stützgurte (14, 14a-14j, 24, 26) jeweils dazu eingerichtet sind, an zwei in Umfangrichtung voneinander beabstandeten Wandsegmenten einer umlaufenden Bauwerksbewandung (202) fixiert zu werden.

4. Trägerkonstruktion (10) nach einem der vorstehenden Ansprüche,
**dadurch gekennzeichnet, dass** die Stützgurte (14, 14a-14j, 24, 26) jeweils zwei Gurtschenkel (28a, 28b) aufweisen, welche durch eine Gurtumlenkung (U) durch den Gurtumlenkkörper (18) gebildet werden, wobei sich die Gurtschenkel (28a, 28b) in voneinander abweichende Erstreckungsrichtungen, insbesondere Radialrichtungen, von dem Zentralbereich nach außen erstrecken.

5. Trägerkonstruktion (10) nach Anspruch 4,
**dadurch gekennzeichnet, dass** die Gurtschenkel (28a, 28b) der jeweiligen Stützgurte (14, 14a-14j, 24, 26) einen Spreizwinkel (β) zueinander aufweisen, wobei der Spreizwinkel (β) vorzugsweise in einem Bereich zwischen 0 Grad und 5 Grad oder in einem Bereich zwischen 5 Grad und 45 Grad, insbesondere in einem Bereich zwischen 10 Grad und 30 Grad, besonders bevorzugt in einem Bereich zwischen 15 Grad und 25 Grad, liegt.

6. Trägerkonstruktion (10) nach einem der vorstehenden Ansprüche,
**dadurch gekennzeichnet, dass** sich mehrere Stützgurte (14, 14a-14j, 24, 26) entlang einer gemeinsamen Rotationsfläche erstrecken.

7. Trägerkonstruktion (10) nach einem der vorstehenden Ansprüche,
**dadurch gekennzeichnet, dass** der Gurtumlenkkörper (18) eine längliche Zentralstrebe (20) mit einer oder mehreren, insbesondere umlaufenden, Umlenkkontaktgliedern (22a-22c) umfasst, wobei die Stützgurte (14, 14a-14j, 24, 26) mit den Umlenkkontaktglieder (22a-22c) in Kontakt stehen.

8. Trägerkonstruktion (10) nach Anspruch 7,
**dadurch gekennzeichnet, dass** das eine oder die mehreren Umlenkkontaktglieder (22a-22c) jeweils als umlaufende Umlenkkontaktringe ausgebildet sind.

9. Trägerkonstruktion (10) nach einem der vorstehenden Ansprüche,
**dadurch gekennzeichnet, dass** der Gurtumlenkkörper (18) mehrere voneinander beabstandete Umlenkebenen (E1-E3) aufweist, wobei in den jeweiligen Umlenkebenen (E1-E3) jeweils Gruppen von Stützgurten (14, 14a-14j, 24, 26) umgelenkt werden.

10. Trägerkonstruktion (10) nach einem der vorstehenden Ansprüche,
**dadurch gekennzeichnet, dass** der Gurtumlenkkörper (18)
- eine Umlenkebene (E1) aufweist, in welcher mehrere sich entlang einer gemeinsamen umlaufenden und nach oben hin zulaufenden Mantelfläche erstreckende Stützgurte (14, 14a-14j) umgelenkt werden; und/oder
- eine Umlenkebene (E2) aufweist, in welcher mehrere sich innerhalb einer gemeinsamen Ebene erstreckende Stützgurte (24) umgelenkt werden; und/oder
- eine Umlenkebene (E3) aufweist, in welcher mehrere sich entlang einer gemeinsamen umlaufenden und nach unten hin zulaufenden Mantelfläche erstreckende Stützgurte (26) umgelenkt werden.

11. Trägerkonstruktion (10) nach einem der vorstehenden Ansprüche,
**dadurch gekennzeichnet, dass** an zumindest einem Ende der jeweiligen Stützgurte (14, 14a-14j, 24, 26) eine Gurtspannvorrichtung (16) angeordnet ist, über welche die Gurtspannung des jeweiligen Stützgurts einstellbar ist und welche vorzugsweise dazu eingerichtet ist, an der umlaufenden Bauwerksbewandung (202) angeordnet, insbesondere befestigt, zu werden.

12. Trägerkonstruktion (10) nach einem der vorstehenden Ansprüche,
**dadurch gekennzeichnet, dass** zumindest ein Stützgurt (14, 14a-14j, 24, 26) mit einem Dehnungsindikator ausgestattet ist, mittels welchem die Gurtdehnung zur Belastungsermittlung erfassbar ist.

13. Emissionsschutzdach (100), mit
- einer Trägerkonstruktion (10); und
- einer Abdeckung (102), welche von der Trägerkonstruktion (10) getragen wird;
**dadurch gekennzeichnet, dass** die Trägerkonstruktion (10) nach einem der vorstehenden Ansprüche ausgebildet ist.

14. Emissionsschutzdach (100) nach Anspruch 13,
**dadurch gekennzeichnet, dass** die Abdeckung (102) stoffschlüssig, kraftschlüssig und/oder formschlüssig mit der Trägerkonstruktion (10), insbesondere mit mehreren Stützgurten (14, 14a-14j, 24, 26) der Trägerkonstruktion (10), verbunden ist.

15. Emissionsschutzdach (100) nach Anspruch 13 oder 14,
**dadurch gekennzeichnet, dass** die Abdeckung (102) und die Trägerkonstruktion (10) eine Abdeckkuppel bilden.
